# EUROPEAN PATENT SPECIFICATION

(11) **EP 3 782 917 B1**
(45) Date of publication and mention of the grant of the patent: **26.04.2023**
(21) Application number: 19789357.1
(22) Date of filing: 18.04.2019
(51) Int. Cl.: B29C 65/02, B29C 65/18, B29C 65/38, B65B 7/08, B65B 31/04, B65B 51/14, B65B 55/00, B65D 77/00, B29C 65/04, B29C 65/08, C01B 33/02

(54) **PACKAGING METHOD FOR POLYCRYSTALLINE SILICON, DOUBLE-PACKAGING METHOD FOR POLYCRYSTALLINE SILICON, AND PRODUCTION METHOD FOR RAW MATERIAL FOR MONOCRYSTALLINE SILICON**
VERPACKUNGSVERFAHREN FÜR POLYKRISTALLINES SILIZIUM, DOPPELVERPACKUNGSVERFAHREN FÜR POLYKRISTALLINES SILIZIUM UND HERSTELLUNGSVERFAHREN FÜR ROHMATERIAL FÜR MONOKRISTALLINES SILIZIUM
PROCÉDÉ D'EMBALLAGE DE SILICIUM POLYCRISTALLIN, PROCÉDÉ D'EMBALLAGE DOUBLE DE SILICIUM POLYCRISTALLIN, ET PROCÉDÉ DE PRODUCTION D'UNE MATIÈRE PREMIÈRE DE SILICIUM MONOCRISTALLIN

(30) Priority: 18.04.2018 JP 2018079562
(43) Date of publication of application: 24.02.2021
(73) Proprietor: Mitsubishi Materials Corporation, Chiyoda-ku Tokyo 100-8117 (JP)
(72) Inventor: NODA, Seina, Yokkaichi-shi, Mie 510-0841 (JP)
(74) Representative: Plasseraud IP
(86) International application number: PCT/JP2019/016660
(87) International publication number: WO 2019/203316

(56) References cited:
- DE-A1- 2 102 493
- JP-A- S5 161 392
- JP-A- H01 124 528
- JP-A- H06 227 519
- JP-A- 2010 036 981
- JP-A- 2010 036 981
- JP-A- 2013 166 557
- JP-A- 2014 122 153
- US-A1- 2004 139 701
- US-A1- 2009 038 273
- US-A1- 2017 081 062

## Description

### BACKGROUND OF THE INVENTION

### Technical Field

The present invention relates to a packaging method of polycrystalline silicon for packaging polycrystalline silicon lumps or the like used as melted material for producing monocrystalline silicon and the like, a double-packaging method of polycrystalline silicon, and a producing method of raw material for monocrystalline silicon. Priority is claimed on Japanese Patent Application No. 2018-79562, filed April 18, 2018.

### Background Art

Conventionally, polycrystalline silicon which is used for raw material of silicon semiconductor or raw material for solar cells and the like is produced into a rod shape by a gas phase method called as the Siemens method for example; and later, it is cut or broken in order to be used as raw material and formed into lumps of polycrystalline silicon having a prescribed size (hereinafter, it is called polycrystalline silicon lumps). The polycrystalline silicon lumps are treated by washing and drying, wrapped with a prescribed amount each, and packaged in cases for transportation and delivered.

Recently, quality of polycrystalline silicon is more severely required as the performance of semiconductor devices improves. For example, causes of contamination are bulk metal impurities, surface metal impurities, surface carbon impurities. Among these, reduction of the surface carbon impurities is still not enough because it is difficult to grasp or ascertain causes of contamination.

For example, Patent Document 1 discloses problems of concentration of organic impurities at surfaces of polycrystalline silicon lumps and a decreasing method thereof with respect to volatile components from tools for storing polycrystalline silicon. Non-patent Document 1 discloses information about generation of out-gas of various resin materials. The out-gas (the volatile components) occurs from material forming the resin materials by influence of temperature causes the surface organic impurities when it adheres on environmental substances, particularly contamination by the surface carbon impurities.

The polycrystalline silicon lumps are packaged in a packaging material (a plastic bag) made of polyethylene film in order to avoid metal contamination as shown in Patent Document 2, for example. In Patent Document 2, the plastic bag is filled with a prescribed weight of polysilicon, then sealed by pulse using a welding jaw at a constant pressure. Temperature of sealing in this sealing operation is adjusted by detecting an electric resistance measurement of a sealing wire. The polycrystalline silicon lumps are strongly demanded to reduce a contamination level thereof. In the sealing of the packaging material, it is necessary to be certainly sealed because insufficient sealing may cause contamination; generally, the sealing is carried out by heat-sealing without bond or the like which may cause contamination after filling.

### Citation List

### Patent Literature

Patent Document 1: Japanese Unexamined Patent Application, First Publication No. 2017-57119
Patent Document 2: Japanese Unexamined Patent Application, First Publication No. 2014-108829
Patent Document 3: Japanese Unexamined Patent Application, First Publication No. S51-61392
Patent Document 4: Japanese Patent Application JP 2010 036981 A

### Non-Patent Literature

Non-Patent Literature 1: Organic contaminant/ out-gas generation mechanism and trouble countermeasure case collection (first edition, first printing, published January 31, 2008, Technical Information Institute Co., LTD)

### SUMMARY OF INVENTION

### Technical Problem

In the packaging method by Patent Document 2, damages of the packaging bag in a welding seam form is cited as a problem; and as a countermeasure therefor, the above-mentioned method is disclosed. However, with respect to a sealing operation of such a conventional packaging bag, the influence of out-gas accompanying the sealing is not sufficiently taken in consideration.

In Patent Document 3, it is disclosed that in order for long-term storage of contents in a packaged object by degassing residual air in the packaged object, the degassing of the packaged object and preliminary sealing are carried out stepwise, a filling port is sealed, and the filling port is cooled. Such a method is considered to be applied to a packing bag filled with polycrystalline silicon lumps; however, although there is an effect of reducing the adhesion of out-gas on the filled objects, there is no final consideration of the out-gas after sealing and it is not possible to have a sufficient measure. The out-gas when sealing due to the heat-sealing of such a packaging bag changes its degrees by sealing conditions (for example, temperature and time), and it is considered the amount of generation can be reduced; however, since it may affect the characteristics of the semiconductor or the like manufactured at the point of use even the contamination is very small, it cannot be negligible in polycrystalline silicon.

Patent Document 4 discloses a packaging method for polycrystalline silicon, comprising, after filling polycrystalline silicon into a packaging bag, sealing the bag.

The present invention is achieved in consideration of the above circumstances, regarding a packaging method of polycrystalline silicon such as polycrystalline silicon lumps, and has an object to provide a packaging method of polycrystalline silicon, a double-packing method of polycrystalline silicon, and a manufacturing method of raw material for monocrystalline silicone to reduce surface contamination due to organic impurities stated above, particularly carbon impurities.

### Solution to Problem

A packaging method for polycrystalline silicon of the present invention is defined in claim 1.

In the present invention, when the planned heat-seal part is heat-sealed, in a state in which the packaging bag is clamped by the clamping rods so as not to flow gas into the filling part, the planned heat-seal part is heat-sealed by the sealing rods. At this time, the gas generated while heat-sealing the packaging bag is generated from the heat-seal part toward the opening and the filling part. The part closer to the filling part side than the planned heat-seal part is clamped by the clamping rods, the gas generated while heat-sealing does not flow into the filling part. Moreover, the distance between the heat-seal part and the clamp part is as small as possible, so that a generation region of the gas between the heat-seal part and the clamping part can be limited to be small so as to be away from the filling part, it is possible to reduce an amount of impurities flowing into the filling part of the polycrystalline silicon even after taking off the clamping rods, and it is possible to reduce the surface contamination of the polycrystalline silicon by the carbon impurities.

In addition, the clamping rods are taken off preferably after temperature of the heat-sealed part is decreased to normal temperature (for example, about 25°C). The influence of adhesion to the filled object can be more decreased because the generated gas component is easily adsorbed on the inner surface of the packaging bag when the temperature of the heat-sealed part is decreased.

As a preferable aspect of the packaging method for polycrystalline silicon, it is preferable that forming a heat-sealed part which is heat-sealed by the sealing rods and a non-sealed part through which gas can flow, to be ranged in a width direction of the opening of the packaging bag, discharging gas between the heat-sealed part and a part which is clamped by the clamping rods, from the packaging bag through a small opening formed by the non-sealed part to an exterior, and subsequently, heat-sealing the non-sealed part.

As a method of discharging the gas from the small opening, exemplified are a method of absorbing the gas from the exterior of the packaging bag through the small opening, and a method of squeezing the gas out to discharge through the small opening by pressing the part between the heat-sealed part and the clamping part.

In the above-mentioned aspect, since the heat-sealed part and the non-sealed part are formed to be continuous on the planned heat-seal part first of all, the gas generated between the heat-sealed part and the clamp part while heat-sealing can be discharged through the small opening made by the non-sealed part to the exterior of the packaging bag. Although there is a possibility of the gas generated while heat-sealing the non-sealed part remains, the surface contamination of the polycrystalline silicon by the carbon impurities can be further reduced since the generation amount of the gas by reducing a width of the non-sealed part than a whole width of the heat-sealed part. It is preferable to take off the clamping rods after decreasing of the temperature of the heat-seal part also in this case.

As a preferred aspect of the packaging method for polycrystalline silicon, the packaging bag be preferably clamped in a state in which the clamping rods or a vicinity thereof is cooled.

In the above-described aspect, since the packaging bag is clamped in a state in which the clamping rods or the vicinity thereof is cooled, so that the temperature of the clamp part or the vicinity thereof is reduced, temperature of a part also between the heat-seal part and the clamp part is not easily increased, and an amount of the generated gas is reduced. Since the part between the heat-seal part and the clamp part is cooled, the adsorption of the gas component generated while heat-sealing to the inner surface of the packaging bag can be accelerated, and the adhesion of the gas component to the filled object can be further reduced.

As a preferred aspect of the packaging method for polycrystalline silicon, it is preferable that, after the planned heat-seal part is heat-sealed by the sealing rods, the packaging bag be bended between the filling part and a part clamped by the clamping rods.

In the above-described aspect, it is possible to prevent the region on the inner surface of the packaging bag on which the gas component generated while heat-sealing from being in contact with the polycrystalline silicon, so that the surface contamination owing to the carbon impurities of the polycrystalline silicon can be reliably reduced. This bending is carried out preferably two times or more.

As a preferred aspect of the packaging method for polycrystalline silicon, it is preferable that the clamping rods be taken off after taking off the sealing rods.

A double-packaging method for polycrystalline silicon of the present invention is followings: storing a first packaged object in which the polycrystalline silicon is packaged in the packaging bag by the above-described packaging method for polycrystalline silicon in a second packaging bag which is different from the packaging bag; clamping a part which is closer to an opening side of the second packaging bag than a storing part storing the first packaged object and which is also closer to the storing part side than a planned heat-seal part to heat-seal the second packaging bag, by clamping rods so as not to flow gas into the storing part, in a state of being clamped by the clamping rods, clamping and heat-sealing the planned heat-seal part by sealing rods, and taking off the clamping rods after heat-sealing.

In the present invention, polycrystalline silicon is double-packaged in the two packaging bags. Accordingly, even in a case in which the inner packaging bag is broken while conveying, it is possible to collect the polycrystalline silicon between the outer packaging bag and the inner packaging bag, and to prevent them from contamination by exposed to the exterior atmosphere.

Moreover, since the second packaging bag is sealed by the same method as the packaging method of the first packaged object, the gas component generated while heat-sealing the second packaging bag is prevented from flowing into a part in which the first packaged object in the second packaging bag, thereby the adhesion of the generated gas component to the outer surface of the first packaged object can be reduced, and it is possible to reduce the contamination by organic impurities resulting from the contact with the first packaged object when unsealed at a user side. Thereby, the contamination in the manufacture of monocrystalline silicon can be also reduced. Furthermore, since the adhesion of the gas component on the outer surface of the first packaged object owing to the heat-sealing of the second packaging bag is reduced, the influence of the contamination can be small even in a case in which the polycrystalline silicon adheres to the outer surface of the first packaged object owing to the damage of the first packaged object.

A manufacturing method of raw material for monocrystalline silicon according to the present invention includes steps of forming polycrystalline silicon lump by machining or crushing polycrystalline silicon, packaging the polycrystalline silicon lumps by the above-described packaging method for polycrystalline silicon or by the above-described double-packaging method for polycrystalline silicon, and unsealing the packaged polycrystalline silicon lumps from the packaged object and being raw material for producing monocrystalline silicon.

In the present invention, it is possible to reduce the surface contamination owing to the carbon impurities of the polycrystalline silicon lumps used as raw material for manufacturing the monocrystalline silicon, and it is possible to reduce the contamination (the concentration of the carbon impurities) owing to the carbon impurities of the monocrystalline silicon manufactured using the polycrystalline silicon lumps.

### Advantageous Effects of Invention

According to the present invention, it is possible to reduce the contamination of the carbon impurities on the surface of the polycrystalline silicon owing to the gas generated while heat-sealing the packaging bag, and it is possible to reduce the concentration of the carbon impurities of the monocrystalline silicon manufactured using the polycrystalline silicon. Furthermore, even at the user's side treating the packaging bag by the double-packaging method of polycrystalline silicon, it is possible to reduce the contamination of the organic impurities by contact when unsealing the packaging bag.

### BRIEF DESCRIPTION OF DRAWINGS

FIG. 1 is a perspective view of a packaging bag of polycrystalline silicon according to one embodiment of the present invention.
FIG. 2A is view explaining a manner of storing polycrystalline silicon in a packaging bag for silicon in the above-mentioned embodiment.
FIG. 2B is a view explaining a manner of storing polycrystalline silicon in the packaging bag for silicon in the above-mentioned embodiment.
FIG. 2C is a view explaining a manner of storing polycrystalline silicon in the packaging bag for silicon in the above-mentioned embodiment.
FIG. 3 is a view showing a planned heat-seal part and a planned clamping part in a sealing region of the packaging bag for silicon filled with polycrystalline silicon in the above-mentioned embodiment.
FIG. 4 is a plan view showing an example in which a clamping rod and a sealing rod are arranged at the planned clamping part and the planned heat-seal part in the sealing region of the packaging bag for silicon in the above-mentioned embodiment.
FIG. 5A is a view showing a manner of sealing the packaging bag for silicon filled with polycrystalline silicon in the above-mentioned embodiment.
FIG. 5B is a view showing a manner of sealing the packaging bag for silicon filled with polycrystalline silicon in the above-mentioned embodiment.
FIG. 5C is a view showing a manner of sealing the packaging bag for silicon filled with polycrystalline silicon in the above-mentioned embodiment.
FIG. 5D is a view showing a manner of sealing the packaging bag for silicon filled with polycrystalline silicon in the above-mentioned embodiment.
FIG. 6 is a perspective view showing a state in which a part of the sealing region of the packaging bag for silicon in the above-mentioned embodiment filled with polycrystalline silicon is sealed.
FIG. 7 is a perspective view showing an example in which a first packaged object in the above-mentioned embodiment filled with polycrystalline silicon and sealed is stored in a second packaged object.
FIG. 8 is a view showing an example in which a planned heat-seal part of a packaging bag for silicon according to a modified example of the above-mentioned embodiment filled with polycrystalline silicon is sealed.

### DESCRIPTION OF EMBODIMENTS

A packaging method of polycrystalline silicon, a double-packaging method of polycrystalline silicon, and a manufacturing method of raw material for monocrystalline silicon according to the present invention will be explained referring the drawings.

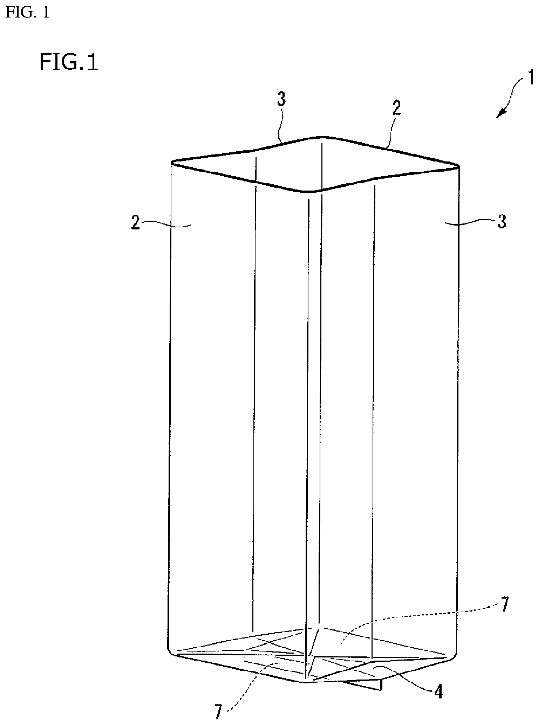

FIG. 1 is a perspective view showing a packaging bag 1 for silicon of a present embodiment.

In the present embodiment, the packaging bag 1 for silicon is formed from a transparent film such as synthetic resin such as polyethylene for example; as shown in FIG.1, it has substantially a rectangular transverse cross sectional shape in which four side surface parts 2, 2, 3, and 3 and a bottom surface part 4 are provided; in a pair of the side surface parts 3 and 3 which are faced to each other among the four side surface parts 2, 2, 3, and 3, folding lines which can be bended toward inside are made at a center position in a width direction in order to fold up the packaging bag 1 to a small size. The packaging bag 1 for silicon is compact by folded along the folding lines when it is unused, and becomes a bag by unfolding when it is used.

In the bottom surface part 4 of the packaging bag 1 for silicon, regarding one end of a film, in a state in which the pair of the side surface parts 3 and 3 are folded along the folding lines, the other pair of the side surfaces 2 and 2 are overlapped with each other at an inner side surface at an end and sealed by a sealing device, so that bottom seal parts 7 are formed.

In the present embodiment, main subjects to package are polycrystalline silicon lumps W which will be raw material of monocrystalline silicon. The polycrystalline silicon lumps W are manufactured in a rod shape by a gas phase method called as the Siemens method, and afterward, manufactured so as to be easily used as raw material by machining (for example, cutting) or crushing.

### -Packaging Method of Polycrystalline Silicon Lumps-

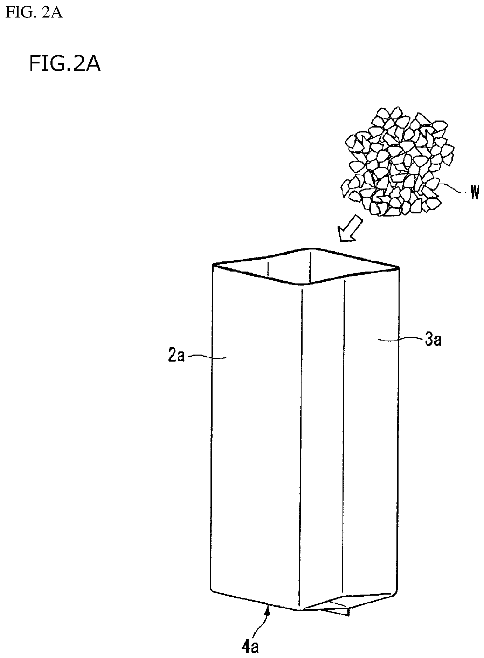

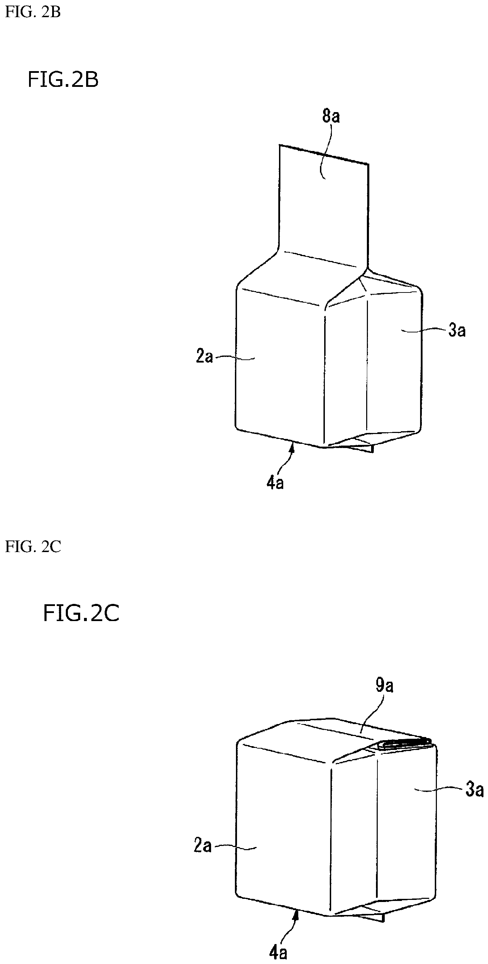

Next, the specific process of packaging the polycrystalline silicon lumps W will be explained. The packaging bag 1 for silicon having the above-stated structure is an inner bag 1a (a packaging bag); and first as shown in FIG. 2A, the inner bag 1a is filled with a prescribed amount of the polycrystalline silicon lumps W. Next, as shown in FIG. 2B, at an opening part at an upper end of the inner bag 1a, a pair of the side surface parts 2a and 2a without the folding line are laminated together at the inner side surfaces to form a laminate part 8a. Subsequently, an upper end of the laminate part 8a is heat-sealed along a horizontal direction (a width direction of the inner bag 1a), so that the inner bag 1a is sealed. Then, as shown in FIG. 2C, a fold part 9a in a belt shape is formed. Thereby, a filling process of the polycrystalline silicon lumps W into the inner bag 1a is finished.

Below, a process of sealing (heat-sealing) a part of the laminate part 8a (a sealing region H1)of the inner bag 1a in FIG. 2B is explained in detail.

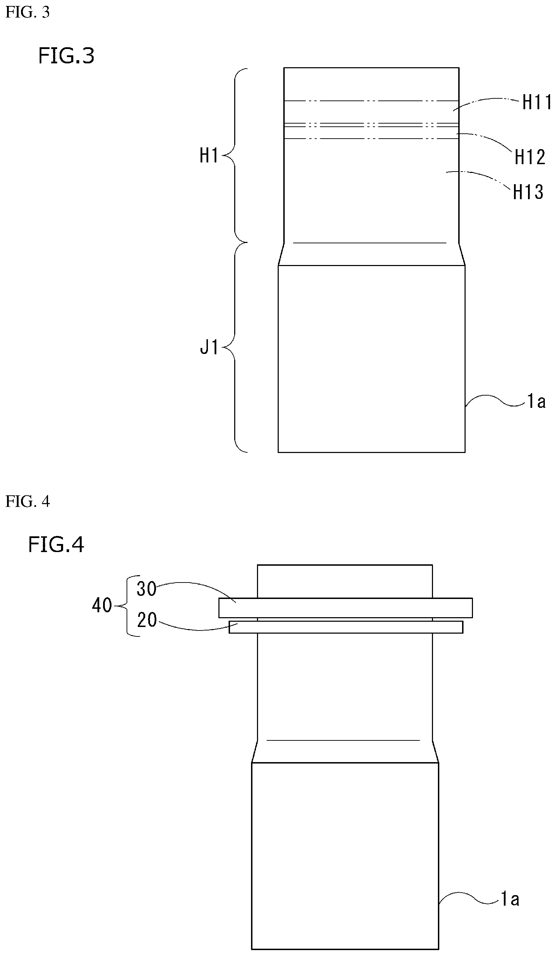

FIG. 3 shows a planned heat-seal part H11, a planned clamping part H12, and an excess length part H13 in the sealing region H1 of the inner bag 1a filled with the polycrystalline silicon lumps W. FIG. 4 shows an example in which sealing rods 30 are arranged on the planned heat-seal part H11 and clamping rods 20 are arranged on the planned clamping part H12.

The inner bag 1a filled with the polycrystalline silicon lumps W has a filling part J1 filled with the polycrystalline silicon lumps Wand the sealing region H1 (the laminate part 8a) positioned at the opening part side of the inner bag 1a. Among them, the part at the opening side of the sealing region H1 is clamped by the clamping rods 20 and the sealing rods 30 shown inf FIG. 4. Hereinafter, a planned part which is clamped by the sealing rods 30 and heat-sealed is the planned heat-seal part H11 and a planned part which is clamped by the clamping rods 20 is H12.

That is, as shown in FIG. 4, in the sealing region H1, the planned heat-seal part H11 is arranged at a vicinity of the opening of the inner bag 1a along a width direction of the inner bag 1a; the planned clamping part H12 is arranged at a near side closer to the filling part J1 than the sealing region H1 along the polycrystalline silicon lumps Width direction of the inner bag 1a; and the excess length part H13 is formed between the sealing region H1 (to be a heat-seal part S 1 after heat-sealing by the sealing rods 30) and the filling part J1. Then, the clamping rods 20 clamp the planned clamping part H12; and the sealing rods 30 clamp the planned heat-seal part H12. Although the sealing rods 30 and the clamping rods 20 are arranged parallel to each other along the polycrystalline silicon lumps Width direction of the inner bag 1a, it is not necessary to be arranged parallel to each other along the polycrystalline silicon lumps Width direction of the inner bag 1a if they can clamp the polycrystalline silicon lumps Whole width of the inner bag 1a; it includes a case in which they are arranged diagonally to the polycrystalline silicon lumps Width direction of the inner bag 1a. Also, the sealing rods 30 and the clamping rods 20 are not necessarily parallel to each other. The polycrystalline silicon lumps Width and the length of the sealing rods 30 and the clamping rods 20 are also set appropriately in accordance with material and a width dimension and the like of the inner bag 1a.

Although the planned heat-seal part H11 and the planned clamping part H12 are arranged with a prescribed interval in the present embodiment, it is preferable that the interval be small. Gas component generated while heat-sealing the planned heat-seal part H11 adheres on an inner surface of the inner bag 1a between the planned parts H11 and H12; therefore, by reducing the interval (shortening a distance), a region where the gas component adheres can be reduced to be small and kept away from the polycrystalline silicon lumps W, so that the contamination of the polycrystalline silicon lumps W filled therein can be reduced.

The excess length part H13 provided between the planned clamping part H12 and the filling part J1 is a part which is bended after heat-sealing the planned heat-seal part H11. By bending the excess length part H13 after heat-sealing, the region on which the gas component generated between the heat-seal part S 1 and a clamp part H121 while heat-sealing is adhered can be maintained in the folding part of the excess length part H13, so that the region is prevented from being in contact with the polycrystalline silicon lumps W.

A heat-sealing device 40 is formed from an impulse sealer and the like for example, and provided with the clamping rods 20 clamping the planned clamping part H12 so as not flow air into the filling part J1, and the sealing rods 30 heat-sealing the planned heat-seal part H11 with heating in a state of clamping the planned heat-seal part H11. Among them, one of the sealing rods 30 is a fixed receiving part; and the other is formed from a pressure part moving toward the receiving part to face the receiving part. On one or both of the receiving part and the pressure part, a heater (not illustrated) heating the planned heat-seal part H11 is provided.

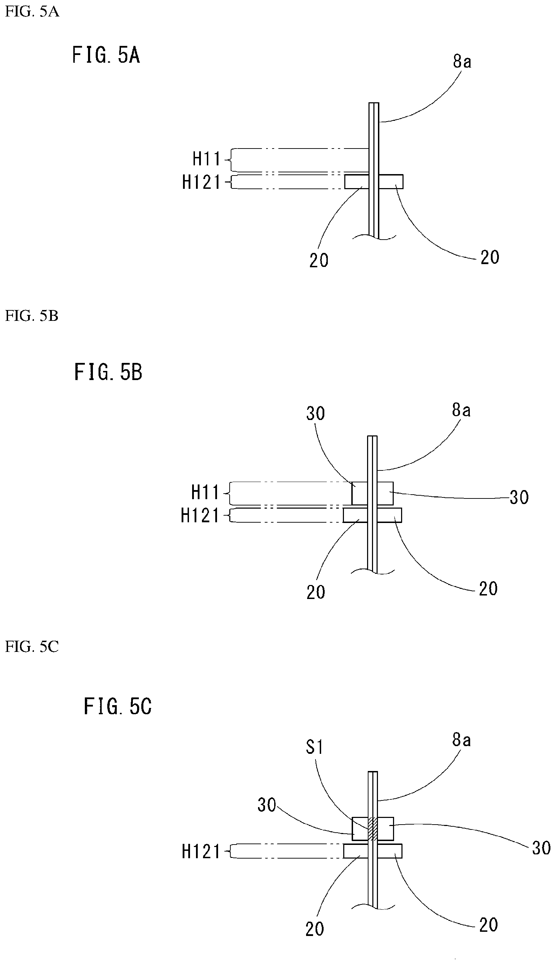

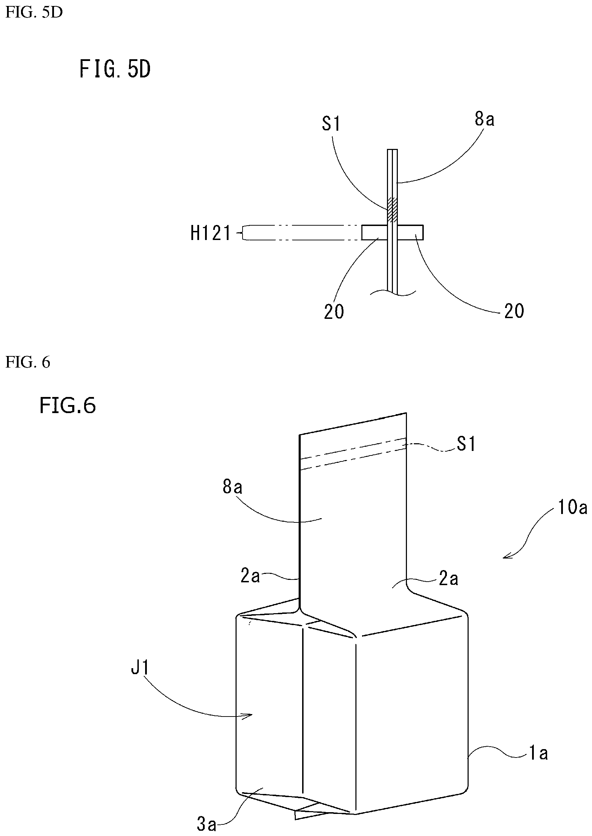

The process of heat sealing by such a heat-sealing device 40 is carried out by the order of steps shown in FIGS. 5, for example. In FIGS. 5, a part of the laminate part 8a (a vicinity of the planned heat-seal part H11 and the planned clamping part H12) is shown with magnified.

First, as shown in FIG. 5A, in order not to flow gas through the planned clamping part H12 of the inner bag 1a filled with the polycrystalline silicon lumps W, the clamping rods 20 cooled in advance clamp it by pressing from both sides. At this time, since the clamping rods 20 are cooled in advance, temperature of the clamp part H121 (the part clamped by the clamping rods 20) and the peripheral thereof is decreased.

In a state in which the planned clamping part H12 is clamped by the cooled clamping rods 20, as shown in FIG. 5B, the planned heat-seal part H11 is clamped by the sealing rods 30. Then, large current flows momentarily in a heater (not illustrated) mounted on one of the sealing rods 30 so that the heater is heated, and the planned heat-seal part H11 is melt by heat and becomes the heat-seal part S1. Although gas is generated accompanied with the heat-sealing when the planned heat-seal part H11 is heat-sealed, since the clamp part H121 which is a lower side (an opposite side to the opening) than the planned heat-seal part H11 is clamped by the clamping rods 20, the gas generated from the heat-seal part S1 which is the opposite side to the opening does not flow into the filling part J1 (the opposite side to the opening).

In this process, temperature of the clamp part H121 and the vicinity thereof is decreased since the clamping rods 20 are cooled in advance, accordingly, the heat while the planned heat-seal part H11 is heat-sealed by the clamping rods 20 is prevented from spreading to the clamp part H121. Moreover, since the gas generated while heat-sealing the planned heat-seal part H11 is cooled by the clamping rods 20, temperature of a part between the heat-seal part S1 and the clamp part H121 is not easily increased and an amount of the gas is less reduced. The generated gas component is easily adsorbed on the inner bag 1a between the heat-seal part S1 and the packaging bag 1 for silicon21 because it is cooled between the heat-seal part S1 and the clamp part H121, so that the gas component generated while heat-sealing is not easily adsorbed in the polycrystalline silicon lumps W. Accordingly, the contamination of the polycrystalline silicon lumps W which are filled is reduced.

The heat-sealing is carried out by the clamping rods 20 cooled in advance in the above embodiment; however, it is applicable that the heat-sealing is carried out in a state in which cool air is blown against the clamping rods 20 and the vicinity thereof. Specifically, the heat-sealing is carried out by clamping the sealing rods 30 at the planned heat-seal part H11 while blowing the cool air on the clamping rods 20 or the vicinity of the clamping rods 20 (between the clamp part H121 and the planned clamping part H12). Thereby, it is possible to obtain an effect as in a case in which the heat-sealing is carried out using the clamping rods 20 cooled in advance; the gas generated while heat-sealing the planned heat-seal part H11 is cooled by the cool air, so that temperature is not easily increased between the heat-seal part S 1 and the clamp part H121, an amount of the generated gas is reduced, and the contamination of the polycrystalline silicon lumps W can be reduced.

The planned heat-seal part H11 is heat-sealed and the heat-seal part S 1 is formed, then the sealing rods 30 are taken off from the heat-seal part S 1 as shown in FIG. 5D. Subsequently, after the temperature of the heat-seal part S 1 is decreased to normal temperature (for example, 25°C), the clamping rods 20 are taken off from the clamp part H121 to make a state shown in FIG. 6. At this time, most of the gas component generated while heat-sealing is adsorbed on the inner surface of the inner bag 1a, the filling part J1 can be prevented from contamination by the gas component even if the clamping rods 20 are taken off. After taking off the clamping rods 20, the excess length part H13 closer to the filling part J1 side than the part clamped by the clamping rods 20 is bended twice or more, so that the part between the part clamped by the clamping rods 20 and the heat-seal part S 1 is wrapped. It is preferable to bend twice or more in order to wrap the heat-seal part S 1 by bending the excess length part H13; but the number of bending is not necessarily limited.

Thereby, the excess length part H13 is folded as shown in FIG. 2C, and the inner bag 1a is filled with the polycrystalline silicon lumps W.

Since the excess length part H13 is folded, the folded H13 is between the region where the gas component is adhered on the inner surface of the inner bag 1a and the filling part J1; and the gas component is furthermore prevented from being in contact with the polycrystalline silicon lumps W in the filling part J1.

Subsequently, an inner-bag packaged object 10a (a first packaged object) in which the inner bag 1a is filled with the polycrystalline silicon lumps W inside and sealed is stored in an outer bag 1b (a second packing bag). In addition, as in the inner bag 1a, the outer bag 1b has the same shape as that of the packaging bag 1 for silicon; however, an outer diameter dimension thereof is slightly larger than an outer diameter dimension of the inner bag 1a. When the inner-bag packaged object 10a is stored in the outer bag 1b, sides of substantially square shape which is a cross sectional shape are aligned.

In the outer bag 1b storing the inner-bag packaged object 10a inside, as in the inner bag 1a, a pair of the side surface parts 2b and 2b without folding lines are laminated at the inside surfaces to each other at the opening of the upper end of the outer bag 1b to form a laminate part 8b, the vicinity of the upper end part of the laminate part 8b is sealed by heat-sealing by the same method as that of the inner bag 1a to package the inner-bag packaged object 10a. A part storing the inner-bag packaged object 10a in the outer bag 1b is a storing part J2. However, in the following explanation of a packaging method, the process is as same as in the packaging method into the inner bag 1a as described above; accordingly, FIG. 2 to FIG. 5 are referred if necessary and the same parts are explained with the same reference symbols as explained in the packaging method of the inner bag 1a. The filling part J1 in FIG. 2 to FIG. 5 is replaced by and read as the storing part J2.

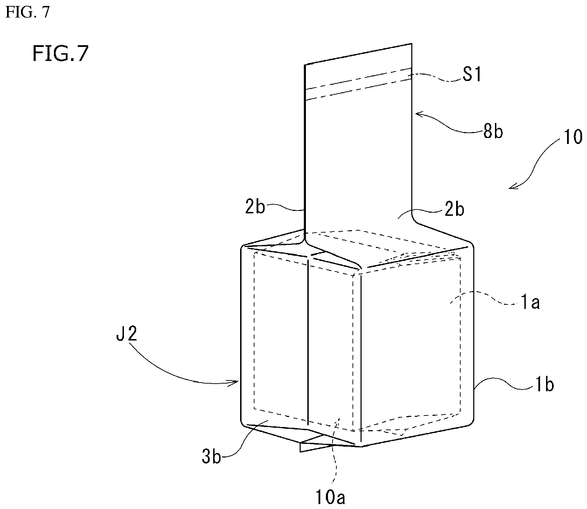

That is, also the outer bag 1b storing the inner-bag packaged object 10a (the first packaged object) is heat-sealed at the storing part J2 storing the inner-bag packaged object 10a, by clamping the planned clamping part H12 positioned closer to the storing part J2 side of the inner-bag packaged object 10a than the planned heat-seal part H11 positioned at the opening side of the outer bag 1b by the clamping rods 20 so as not to flow air, clamping and heat-sealing the planned heat-seal part H11 by the sealing rods 30 along the clamp part H121 in a state of being clamped by the clamping rods 20, and taking off the sealing rods 30 and the clamping rods 20 after temperature of the heat-seal part S 1 is decreased to normal temperature. A silicon packaged object 10 having a double structure storing the polycrystalline silicon lumps W therein shown in FIG. 7 is formed by such a process. Then, the part closer to the storing part J2 side than the part clamped by the clamping rods 20 in the excess length part H13 of the outer bag 1b is bended, and the excess length part H13 is bended to wrap the part between the part clamped by the clamping rods 20 and the heat-seal part S1, so that a folded part (not illustrated) with a belt shape is formed, and the packaged object 10 having substantially rectangular box shape is formed.

By sealing the outer bag 1b in a state of being clamped by the cooled clamping rods 20 as in the inner bag 1a, the gas generated while heat-sealing the planned heat-seal part H11 of the outer bag 1b is cooled by the clamping rods 20, and temperature around the clamp part H121 is also decreased. As a result, also the temperature of the part between the heat-seal part S1 and the clamp part H121 is not easily increased, and an amount of the generated gas is reduced. Since the part between the heat-seal part S1 and the clamp part H121 is cooled and the generated gas component is easily adsorbed, it is possible to accelerate the adsorption of the gas generated while heat-sealing on the inner surface of the outer bag 1b in a limited area of the heat-seal part S1 and the clamp part H121, and the adhesion of the gas component on the outer surface of the inner-bag packaged object 10a can be reduced. Since the clamping rods 20 clamp the clamp part H121 until the temperature of the heat-seal part S1 is reduced to the normal temperature: in other words, since the clamping rods 20 are taken off after the temperature of the heat-seal part S1 is reduced to the normal temperature, the gas component generated while heat-sealing is prevented from flowing into the outer bag 1b. Moreover, after the clamping rods 20 are taken off, the part closer to the storing part J2 side than the part clamped by the clamping rods 20 in the excess length part H13 of the outer bag 1b is bended to fold the excess length part H13 so as to wrap the part between the part clamped by the clamping rods 20 and the heat-seal part S1; as a result, it is possible to prevent the area on which the gas component is adhered on the inner surface of the outer bag 1b from being in contact with the outer surface of the inner-bag packaged object 10a, and the adhesion of the gas component on the inner-bag packaged object 10a is reduced. Accordingly, even in a case in which the inner bag 1a in the silicon packaged object 10 is broken while conveying and the like, it is possible to prevent the polycrystalline silicon lumps W from being contaminated by the gas component adhered to the outer surface of the inner bag 1a and the inner surface of the outer bag 1b.

The silicon packaged object 10 is conveyed to a factory or the like manufacturing monocrystalline silicon; and the packaged polycrystalline silicon lumps W is unsealed from the silicon packaged object 10 and become raw material for manufacturing monocrystalline silicon.

In this embodiment, since the same packaging method is applied for sealing the outer bag 1b as in the inner bag 1a, the gas component generated while heat-sealing the outer bag 1b is prevented from flowing into the part where the inner-bag packaged object 10a stored in the outer bag 1b, thereby the adhesion of the gas component on the outer surface of the inner-bag packaged object 10a can be reduced, and contact contamination by being in contact with the inner-bag packaged object 10a when it is unsealed at a user's side can be reduced. Thereby the contamination in manufacturing monocrystalline silicon can be also reduced. Moreover, even in a case in which the inner bag 1a of the inner-bag packaged object 10a is broken, since the adhesion of the gas component when heat-sealing on the outer surface of the inner-bag packaged object 10a is reduced, an effect of the contamination can be small even if the packaged polycrystalline silicon lumps W are adhered on the outer surface of the inner-bag packaged object 10a.

In addition, when unsealing, it is preferable that the outer bag 1b and the inner bag 1a be cut at a position closer to the storing part J2 side in the outer bag 1b (at the filling part J1 side in the inner bag 1a) than the part clamped by the clamping rods 20 (hereinafter, these are described simply "the storing part J2 (the filling part J1)" or "the filling part J1 (the storing part J2)") so as to remove the part clamped by the heat-seal part S1 and the clamping rods 20. Therefore, for example, on the outer surfaces of the inner bag 1a and the outer bag 1b, indications showing a position for appropriately cutting may be added on a position closer to the storing part J2 (the filling part J1) side than the packaging bag 1 for silicon 21.

In the present embodiment, when heat-sealing the planned heat-seal part H11, in a state in which the planned clamping part H12 positioned at the filling part J1 (the storing part J2) side of the planned heat-seal part H11 is clamped so as not to flow air, the planned heat-seal part H11 is heat-sealed by the sealing rods 30. At this time, gas generated when the packaging bag 1 for silicon is heat-sealed is generated at both sides of the heat-seal part S1; however, since the clamp part H121 positioned at the filling part J1 (the storing part J2) side is clamped by the clamping rods 20, gas generated from the heat-seal part S1 on an opposite side to the opening does not flow into the filling part J1 (the storing part J2) (the opposite side to the opening). Furthermore, since the clamping rods 20 are taken off after the temperature of the heat-seal part S 1 becomes normal temperature, an amount of impurity flowing into the filling part J1 (the storing part J2) of the polycrystalline silicon lumps W can be reduced and the contamination by surface carbon impurities of the polycrystalline silicon lumps W by the gas can be reduced.

Moreover, by clamping the planned clamping part H12 by the cooled clamping rods 20, temperature of the clamp part H121 is decreased, so that heat generated when the planned heat-seal part H11 is heat-sealed is prevented from spreading to the clamp part H121. Furthermore, since the gas generated while heat-sealing the planned heat-seal part H11 is cooled by the clamping rods 20, temperature around the clamp part H121 is also decreased, so that temperature of the part between the heat-seal part S1 and the clamp part H121 is not also easily increased and an amount of the generated gas is reduced. Moreover, since the generated gas component is easily adsorbed because the part between the heat-seal part S 1 and the clamp part H121 is cooled, the adsorption of the gas component generated while the heat-sealing on the inner surface of the inner bag 1a can be accelerated in a limited area between the heat-seal part S1 and the clamp part H121, so that the adhesion of the gas component on the polycrystalline silicon lumps W can be reduced.

Furthermore, since the excess length part H13 is bended closer to the filling part J1 (the storing part J2) side than the part clamped by the clamping rods 20, the area of the inner surface of the inner bag 1a on which the gas component generated while heat-sealing is adhered is prevented from being in contact with the polycrystalline silicon lumps W, so that the surface contamination of the polycrystalline silicon lumps W by carbon impurities can be reliably prevented.

Moreover, since the polycrystalline silicon lumps are double-packaged by the two bags 1 (the inner bag 1a and the outer bag 1b), even when the inner bag 1a is broken while conveying for example, the polycrystalline silicon lumps W can be collected between the outer bag 1b and the inner bag 1a, and these are prevented from contamination owing to be exposed to an outer atmosphere.

By applying the packaging method of the polycrystalline silicon lumps W explained above, the contamination by the carbon impurities on the surface of the polycrystalline silicon lumps W used as raw material for manufacturing monocrystalline silicon can be reduced, and the contamination (concentration of carbon impurities) by the carbon impurities of the monocrystalline silicon manufactured from the polycrystalline silicon lumps W can be reduced.

When using the polycrystalline silicon lumps W in the present invention, the gas component accompanying with the heat-sealing is adhered on the inner surface of the inner bag 1a (or the outer bag 1b) closer to the filling part J1 side than the heat-seal part S1. Therefore, it is possible to prevent the adhesion of the gas component when the polycrystalline silicon lumps W is taken out by cutting off a prescribed length of the excess length part H13 from the heat-seal part S1 to the filling part J1 (the storing part J2) side (so as to remove the part including at least the part clamped by the clamping rods 20) when the inner bag 1a (or the outer bag 1b) is unsealed and then taking off the polycrystalline silicon lumps W (or the inner-bag packaged object 10a) from the inner bag 1a (or the outer bag 1b).

The present invention is not limited to the above-described embodiment and various modifications may be made without departing from the scope of the present invention as defined in the appended claims.

For example, it is not limited to the above-described embodiment in which the sealing rods 30 are disposed to cover a whole of the planned heat-seal part H11 in the polycrystalline silicon lumps Width direction so that the planned heat-seal part H11 is heat-sealed to form the heat-seal part S1 all at once as shown in FIG. 4 and FIG. 6. It is applicable that the planned heat-seal part H11 is partially heat-sealed so that a non-sealed part is formed in a part of the packaging bag 1 for silicon in the polycrystalline silicon lumps Width direction, and after discharging the gas generated while heat-sealing from the non-sealed part, the remain (the non-sealed part) of the planned heat-seal part H11 is heat-sealed to form the heat-seal part S1.

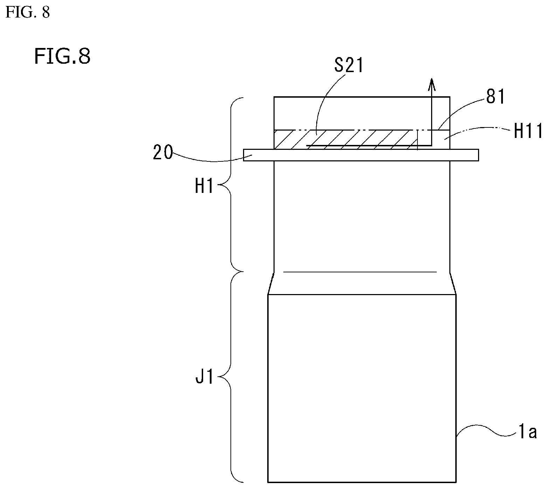

FIG. 8 shows an example in which the planned heat-seal part H11 of the inner bag 1a filled with the polycrystalline silicon lumps W is partially heat-sealed, according to a modified example of the above-described embodiment. Although the inner bag 1a is explained as an example, it is the same in the outer bag 1b when double-packaging.

In this modified example, in a state in which the planned clamping part H12 is clamped by the clamping rods 20, when the planned heat-seal part H11 is heat-sealed by the sealing rods 30, a heat-sealed part S21 heat-sealed by the sealing rods 30 and the non-sealed part through which air can flow are continuously formed along the clamp part H121, after discharging gas between the heat-sealed part S21 and the planned clamping part H12 through a small opening 81 formed by the non-sealed part to the opening side of the inner bag 1a, then the non-sealed part (the small opening 81) of the planned heat-seal part H11 is heat sealed.

The gas from the small opening 81 is discharged to exterior of the inner bag 1a by sucking from the outside of the inner bag 1a or pushing out by pressing between the heat-sealed part S21 and the clamp part H121. In addition, the above gas is gas generated while heat-sealing a part of the planned heat-seal part H11.

In this modified example, since the heat-sealed part S21 heat-sealed by the sealing rods 30 and the non-sealed part are continuously formed along the clamp part H121, the gas generated between the heat-sealed part S21 and H121 when the part of the planned heat-seal part H11 is heat-sealed can be discharged to the exterior through the small opening 81 formed by the non-sealed part. Since a width of the non-sealed part is smaller than the polycrystalline silicon lumps Whole width of the heat-seal part S1, an amount of the gas generated while heat-sealing the non-sealed part is smaller comparing to the heat-sealing method of the above-described embodiment in which the polycrystalline silicon lumps Whole width of the packaging bag 1 for silicon is heat-sealed without forming the non-sealed part, so that the contamination of the polycrystalline silicon lumps W by the surface carbon impurities can be furthermore reduced.

The small opening 81 formed by the non-sealed part is provided at a right side end in FIG. 8 in this modified example; but it is not limited to this, it is enough that it is a part of the heat-seal part even if it is the left side in FIG. 8. Moreover, a plurality of the small opening 81 may be formed. In addition, it is preferable also in these cases to take off the clamping rods after the temperature of the heat-seal part is decreased.

The respective methods in the modified example can be applied also in a case for heat-sealing the outer bag 1b storing the inner-bag packaged object 10a. In this case, the contamination on the outer surface of the inner-bag packaged object 10a by the gas generated while heat-sealing the outer bag 1b can be more reduced.

In the above-described embodiment, the clamping rods 20 are cooled in advance; but it is not limited to this. For example, it may be cooled after clamping the planned clamping part H12.
In addition, in a case in which the clamping rods 20 are cooled in advance, or in a case in which the clamping rods 20 are cooled after clamping, temperature of the planned heat-seal part tends to be low comparing to a case in which the clamping rods 20 are not cooled; accordingly, it is preferable to set a width dimension of the planned heat-seal part H11 not to deteriorate sealing strength of the heat-seal part S 1. Moreover, it may be applicable to provide a cooling rod between the sealing rods 30 and the clamping rods 20 in the heat-sealing device 40 to cool the part between the planned clamping part H12 and the planned heat-seal part H11 by the cooling rod. The clamping rods 20 are not necessarily cooled. In this case, the clamping rods 20 is enough to be taken off after decreasing the temperature of the heat-seal part S 1 to the normal temperature as in the above-described embodiment.

The heat-sealing device 40 is structured by an impulse sealer in the above-described embodiment; however, the method of the present invention is also possible in a case in which the heat-sealing is carried out by a hot-plate sealer, a hand sealer, a high frequency sealer, an ultrasonic sealer, or the like.

The heat-sealing device 40 in the above-described embodiment has a device structure including the sealing rods 30 and 20; however, the heat-sealing device may have a structure carrying out the heat-sealing by a device structure in which the sealing rods and the clamping rods are different.

The packaging bag 1 for silicon may be a bag of low density polyethylene if it is polyethylene; and another bag than it, for example, a bag of the other material such as polypropylene or the like can also be used. Conditions of heat-sealing temperature and the like in the heat-sealing device are appropriately set in accordance with material of packaging bags, a heat-sealing width, a heat-sealing strength and the like.

### -Examples-

Polyethylene bags having a thickness of about 0.3 mm and a width about 140 mm were used as the packaging bags, filled with polycrystalline silicon lumps, and heat-sealed using an impulse sealer (MTB-25 made by Tsubakimoto Kogyo Co., Ltd). Regarding the polycrystalline silicon lumps, three lumps having a maximum side length of 20 mm to 50 mm were put on a Petri dish made of glass, and stored in the packaging bag. In order to exclude a possibility that contaminants originated from organic substance were adhered on the surface of the polycrystalline silicon lumps, the Petri dish on which a cleansing treatment was carried out were put together in an electric furnace as a pretreatment, and a heating treatment was carried out at about 500°C for about 120 minutes. Thereby, in a case in which impurities originated from organic substance were adhered on the surface of the polycrystalline silicon lumps, most of that is volatilized and removed.

Pretreated polycrystalline silicon lumps were stored in the packaging bag together with the Petri dish so as not to be in contact with the inner surface of the packaging bag. The Petri dish is stored together in order to exclude the possibility of adhesion of the carbon impurities from the packaging bag at the contact part to the packaging bag.

After storing the polycrystalline silicon lumps in the packaging bag, in a state in which the planned clamping part of the packaging bag was clamped by the clamping rods, temperature of the sealing rods of the impulse sealer was set to about 160°C and the opening was heat-sealed. The clamping rods were plastic plates having flat surfaces with a width of about 10 mm, and the flat surfaces clamped the packaging bag so as not to flow gas. A distance between the part clamped by the clamping rods and the heat-sealed part was 20 mm.

After heat-sealing, the sealing rods were taken off; then, after a lapse of 30 seconds, the clamping rods were taken off. Then, the excess length part of the packaging bag was bended twice to wrap the part between the heat-sealed part and the part clamped by the clamping rods between the part clamped by the clamping rods and the part storing the polycrystalline silicon lumps (Example 1). One in which the excess length part of the packaging bag was not bended was also formed by the same method (Example 2).

At the time of heat-sealing, all width of the packaging bag was not heat-sealed, the planned heat-seal part was moved with respect to the position of the sealing rods, in a state in which a part of 3 mm at an end in a width of the packaging bag was not heat sealed, the remaining part was heat-sealed, then the part between the heat-sealed part and the clamped part was pressed so that gas therebetween was discharged from the small opening of the non-sealed part; after that, the non-sealed part was heat-sealed. After that, similarly to Example 1 and Example 2, one in which the excess length part was bended (Example 3) and one in which the excess length part was not bended (Example 4) were made. In Example 3 and Example 4, the heat-sealing was carried out in a state in which the planned clamping part was clamped from a step of forming the non-sealed part until the non-sealed part was heat-sealed. Besides that, a handling manner and method of the clamping rods and heat-sealing rods when heat-sealing were performed as in Example 1 and Example 2.

The clamping rods clamping the packaging bag was stored in an atmosphere of about 5°C before used, and the packaging bag was clamped by those clamping rods and heat-sealed. Temperature of the clamp part and the vicinity thereof was 5°C to 10°C when heat-sealing. After that, similarly to Example 1 and Example 2, one in which the excess length part was bended (Example 5) and one in which it was not bended (Example 6) were made. In addition, also in Example 5 and Example 6, a handling manner and method of the clamping rods and the heat-sealing rods when heat sealing were performed as in the above-described examples.

Comparative Example 1 in which the packaging bag was not clamped by the clamping rods when heat sealing was made; and Reference Example 1 in which the opening was not heat-sealed but closed by a clip so as not to flow gas was made.

Examples and Comparative Examples were performed so that heating for heat-sealing was 2.1 seconds, cooling (temperature reduction) after heating was 5 seconds, and then the sealing rods were taken off from the heat-sealed part.

The packaged object storing the polycrystalline silicon lumps as described above was stored in room temperature (about 25°C) for about five hours. In addition, above-described packaging and storing were performed in a clean room (U.S. Federal Standard Fed-Std 209E, class 1000).

The packaged objects of Examples and Comparative Examples obtained as above were unsealed to take out the filled polycrystalline silicon lumps; impurity concentration on a surface thereof was measured by a thermal desorption gas chromatograph mass spectrometer (TD-GC/MS). The results are shown in Table 1.

Main components of measured carbon impurities were 1-Butanol, Toluene, 1, 3, 5, 7-Cyclooctatetraene, 1-Hexanol, 2-ethyl-, Alkane, and the other components (the other components were probably oxidized Alkane).

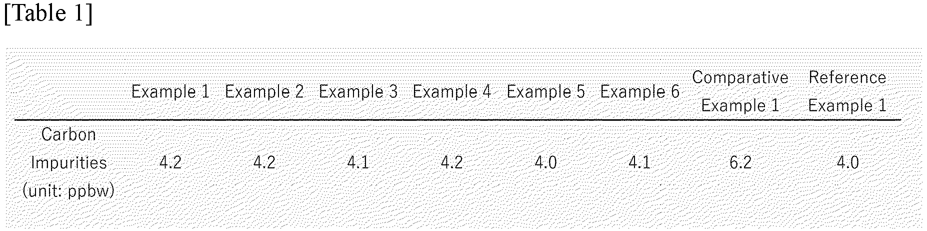

As known from Table 1, in the polycrystalline silicon lumps packaged by the packaging method of Examples, the carbon impurities contamination on the surface was small comparing with Comparative Example 1 in which the clamping rods were not used; concentration of the carbon impurities was not more than 4.3 ppbw which was a same level with Reference Example 1 which was not heat-sealed. Comparing with a case in which the heat-sealing was carried out in a state in which the clamping rods were used, an effect of reducing the impurity concentration by forming the non-sealed part to discharge the gas including impurities generated while heat-sealing was confirmed. It was also confirmed to reduce the impurity concentration by decreasing temperature around the heat-sealed part by the cooled clamping rods. Although the carbon impurities of a level with 4 ppbw were confirmed on the surface of the polycrystalline silicon lumps used in the present examples, these were thought to be composition which was not volatilized even by the pretreatment of the polycrystalline silicon lumps, or a part of re-adhered volatile component. From these results, it is found that the packaging method of the present embodiment can reduce the surface contamination of the polycrystalline silicon lumps.

Among Examples, in Example 1 in which the excess length part was bended after heat-sealing, the carbon impurity concentration on the surface of the polycrystalline silicon lumps was reduced comparing with Example 2 in which the excess length part was not bended. Similarly, in Example 3 and Example 5 in which the excess length part was bended, the carbon impurities were reduced on the surface comparing with Example 4 and Example 6 in which the excess length part was not bended.

From the results of Examples, it can be expected to reduce the adhesion of the carbon impurities on the outer surface of the inner bag which was stored also when packaging the outer bag in a packaging method in which double packaging is carried out, because a reduction of the carbon impurities (organic impurities), which is thought to be component of the packaging bag generated while heat-sealing the opening is found in the packaging method of the present invention. Accordingly, it is thought to be possible to reduce an influence of the carbon impurities when handling the packaging bag in a usage step of the polycrystalline silicon lumps.

### Industrial Applicability

It is possible to packaging polycrystalline silicon lumps or the like used as melted material for manufacturing monocrystalline silicon or the like in a state in which surface contamination by organic impurities, particularly carbon impurities are reduced.

### Reference Signs List

- 1: Packaging bag for silicon (Packaging bag)
- 1a: Inner bag (Packaging bag)
- 1b: Outer bag (Packaging bag)
- 2, 2a, 2b, 3, 3a, 3b: Side surface part
- 4: Bottom surface part
- 7: Bottom seal parts
- 8a, 8b: Laminate part
- 9a: Fold part
- 10: Packaged object
- 10a: Inner-bag packaged object
- 20: Clamping rod
- 30: Sealing rod
- 40: Heat-sealing device
- 81: Small opening (Non-sealed part)
- H1: Sealing region
- H11: Planned heat-seal part
- H12: Planned clamping part
- H121: Clamp part
- H13: Excess length part
- J1: Filling part
- J2: Storing part
- S1: Heat-seal part
- S21: Heat-sealed part
- W: Polycrystalline silicon lumps

## Claims

1. A packaging method for polycrystalline silicon, comprising:
- after filling polycrystalline silicon (W) into a packaging bag (1), clamping a part which is closer to an opening side of the packaging bag than a filling part filled with the polycrystalline silicon and which is also closer to the filling part side than a planned heat-seal part to heat-seal the packaging bag, by clamping rods (20) so as not to flow gas into the filling part;
- in a state of being clamped by the clamping rods, clamping and heat-sealing the planned heat-seal part (S1) by sealing rods (30);
- and taking off the clamping rods after heat-sealing.

2. The packaging method for polycrystalline silicon according to claim 1, comprising:
- forming a heat-sealed part (S21) which is heat-sealed by the sealing rods and a non-sealed part through which gas can flow, to be ranged in a width direction of the opening of the packaging bag,
- discharging gas between the heat-sealed part and a part which is clamped by the clamping rods, from the packaging bag through a small opening (81) formed by the non-sealed part to an exterior,
- and subsequently, heat-sealing the non-sealed part.

3. The packaging method for polycrystalline silicon according to claims 1 or 2, wherein the packaging bag is clamped in a state in which the clamping rods or a vicinity thereof is cooled.

4. The packaging method for polycrystalline silicon according to any one of claims 1 to 3, wherein after the planned heat-seal part is heat-sealed by the sealing rods, the packaging bag is bended between the filling part and a part clamped by the clamping rods.

5. The packaging method for polycrystalline silicon according to any one of claims 1 to 4, wherein the clamping rods are taken off after taking off the sealing rods.

6. A double-packaging method for polycrystalline silicon, comprising:
- storing a first packaged object (10a) in which the polycrystalline silicon is packaged in the packaging bag (1a) by the packaging method for polycrystalline silicon according to any one of claims 1 to 5 in a second packaging bag (1b) which is different from the packaging bag;
- clamping a part which is closer to an opening side of the second packaging bag than a storing part storing the first packaged object and which is also closer to the storing part side than a planned heat-seal part to heat-seal the second packaging bag, by clamping rods so as not to flow gas into the storing part,
- in a state of being clamped by the clamping rods, clamping and heat-sealing the planned heat-seal part by sealing rods, and
- taking off the clamping rods after heat-sealing.

7. The double-packaging method for polycrystalline silicon according to claim 6, wherein the clamping rods are taken off after taking off the sealing rods.

8. A producing method of raw material for monocrystalline silicon, comprising :
- forming polycrystalline silicon lump by machining or crushing polycrystalline silicon,
- packaging the polycrystalline silicon lump by the packaging method for polycrystalline silicon according to any one of claims 1 to 5 or by the double-packaging method for polycrystalline silicon according to claims 6 or 7, and taking out the packaged polycrystalline silicon lump from the packaged bag, said polycrystalline silicon lump being raw material for producing monocrystalline silicon.

## Patentansprüche

1. Verpackungsverfahren für polykristallines Silizium, umfassend:
- nach einem Einfüllen von polykristallinem Silizium (W) in einen Verpackungsbeutel (1), Einklemmen eines Teils, der einer Öffnungsseite des Verpackungsbeutels näher ist als ein Füllteil, der mit dem polykristallinen Silizium gefüllt ist, und der auch der Füllteilseite näher ist als ein geplanter Heißversiegelungsteil, um den Verpackungsbeutel heißzuversiegeln, durch Klemmstäbe (20), um kein Gas in den Füllteil strömen zu lassen;
- in einem durch die Klemmstäbe eingeklemmten Zustand, Einklemmen und Heißversiegeln des geplanten Heißversiegelungsteils (S1) durch Versiegelungsstäbe (30);
- und Abnehmen der Klemmstäbe nach dem Heißversiegeln.

2. Verpackungsverfahren für polykristallines Silizium nach Anspruch 1, umfassend:
- Bilden eines heißversiegelten Teils (S21), der durch die Versiegelungsstäbe heißversiegelt ist, und eines nicht versiegelten Teils, durch den Gas strömen kann, angeordnet in einer Breitenrichtung der Öffnung des Verpackungsbeutels,
- Ablassen von Gas zwischen dem heißgesiegelten Teil und einem Teil, der durch die Klemmstäbe eingeklemmt ist, aus dem Verpackungsbeutel durch eine kleine Öffnung (81), die durch den nicht versiegelten Teil gebildet ist, nach außen
- und anschließendes Heißversiegeln des nicht versiegelten Teils.

3. Verpackungsverfahren für polykristallines Silizium nach Anspruch 1 oder 2, wobei der Verpackungsbeutel in einem Zustand eingeklemmt wird, in dem die Klemmstäbe oder eine Umgebung davon gekühlt werden.

4. Verpackungsverfahren für polykristallines Silizium nach einem der Ansprüche 1 bis 3, wobei nach dem Heißversiegeln des geplanten Heißversiegelungsteils durch die Versiegelungsstäbe der Verpackungsbeutel zwischen dem Füllteil und einem durch die Klemmstäbe eingeklemmten Teil gebogen wird.

5. Verpackungsverfahren für polykristallines Silizium nach einem der Ansprüche 1 bis 4, wobei die Klemmstäbe nach dem Abnehmen der Versiegelungsstäbe abgenommen werden.

6. Doppelverpackungsverfahren für polykristallines Silizium, umfassend:
- Lagern eines ersten verpackten Objekts (10a), in dem das polykristalline Silizium in dem Verpackungsbeutel (1a) durch das Verpackungsverfahren für polykristallines Silizium nach einem der Ansprüche 1 bis 5 verpackt ist, in einem zweiten Verpackungsbeutel (1b), der sich von dem Verpackungsbeutel unterscheidet;
- Einklemmen eines Teils, der einer Öffnungsseite des zweiten Verpackungsbeutels näher ist als ein Füllteil, der das erste verpackte Objekt lagert, und der auch der Füllteilseite näher ist als ein geplanter Heißversiegelungsteil, um den zweiten Verpackungsbeutel heißzuversiegeln, durch Klemmstäbe, um kein Gas in den Füllteil strömen zu lassen;
- in einem durch die Klemmstäbe eingeklemmten Zustand, Einklemmen und Heißversiegeln des geplanten Heißversiegelungsteils durch Versiegelungsstäbe;
- und Abnehmen der Klemmstäbe nach dem Heißversiegeln.

7. Doppelverpackungsverfahren für polykristallines Silizium nach Anspruch 6, wobei die Klemmstäbe nach dem Abnehmen der Versiegelungsstäbe abgenommen werden.

8. Verfahren zur Herstellung von Rohmaterial für monokristallines Silizium, umfassend:
- Bilden eines polykristallinen Siliziumklumpens durch maschinelles Bearbeiten oder Zerkleinern von polykristallinem Silizium,
- Verpacken des polykristallinen Siliziumklumpens durch das Verpackungsverfahren für polykristallines Silizium nach einem der Ansprüche 1 bis 5 oder durch das Doppelverpackungsverfahren für polykristallines Silizium nach Ansprüchen 6 oder 7, und Herausnehmen des verpackten polykristallinen Siliziumklumpens aus dem verpackten Beutel, wobei der polykristalline Siliziumklumpen Rohmaterial zum Herstellen von monokristallinem Silizium ist.

## Revendications

1. Procédé d'emballage pour du silicium polycristallin, comprenant :
- après le remplissage de silicium polycristallin (W) dans un sac d'emballage (1), le serrage d'une partie qui est plus près d'un côté ouverture du sac d'emballage qu'une partie de remplissage remplie avec le silicium polycristallin et qui est également plus près du côté partie de remplissage qu'une partie de thermoscellage prévue pour thermosceller le sac d'emballage, par des tiges de serrage (20) de manière à ne pas faire s'écouler de gaz dans la partie de remplissage ;
- dans un état où elle est serrée par les tiges de serrage, le serrage et le thermoscellage de la partie de thermoscellage prévue (S1) par des tiges de scellage (30) ;
- et le retrait des tiges de serrage après le thermoscellage.

2. Procédé d'emballage pour du silicium polycristallin selon la revendication 1, comprenant :
- la formation d'une partie thermoscellée (S21) qui est thermoscellée par les tiges de scellage et une partie non scellée à travers laquelle du gaz peut s'écouler, pour être étendues dans une direction de largeur de l'ouverture du sac d'emballage,
- la décharge de gaz entre la partie thermoscellée et une partie qui est serrée par les tiges de serrage, à partir du sac d'emballage à travers une petite ouverture (81) formée par la partie non-scellée jusqu'à un extérieur,
- et par la suite, le thermoscellage de la partie non scellée.

3. Procédé d'emballage pour du silicium polycristallin selon les revendications 1 ou 2, dans lequel le sac d'emballage est serré dans un état dans lequel les tiges de serrage ou un voisinage de celles-ci est refroidi.

4. Procédé d'emballage pour du silicium polycristallin selon l'une quelconque des revendications 1 à 3, dans lequel après que la partie de thermoscellage prévue a été thermoscellée par les tiges de scellage, le sac d'emballage est plié entre la partie de remplissage et une partie serrée par les tiges de serrage.

5. Procédé d'emballage pour du silicium polycristallin selon l'une quelconque des revendications 1 à 4, dans lequel les tiges de serrage sont retirées après le retrait des tiges de scellage.

6. Procédé d'emballage double pour du silicium polycristallin, comprenant :
- le stockage d'un premier objet emballé (10a) dans lequel le silicium polycristallin est emballé dans le sac d'emballage (la) par le procédé d'emballage pour du silicium polycristallin selon l'une quelconque des revendications 1 à 5 dans un deuxième sac d'emballage (1b) qui est différent du sac d'emballage ;
- le serrage d'une partie qui est plus près d'un côté ouverture du deuxième sac d'emballage qu'une partie de stockage stockant le premier objet emballé et qui est également plus près du côté partie de stockage qu'une partie de thermoscellage prévue pour thermosceller le deuxième sac d'emballage, par des tiges de serrage de manière à ne pas faire s'écouler de gaz dans la partie de stockage,
- dans un état où elle est serrée par les tiges de serrage, le serrage et le thermoscellage de la partie de thermoscellage prévue par des tiges de scellage, et
- le retrait des tiges de serrage après le thermoscellage.

7. Procédé d'emballage double pour du silicium polycristallin selon la revendication 6, dans lequel les tiges de serrage sont retirées après le retrait des tiges de scellage.

8. Procédé de production de matière première pour du silicium monocristallin, comprenant :
- la formation de morceaux de silicium polycristallin en usinant ou écrasant du silicium polycristallin,
- l'emballage des morceaux de silicium polycristallin par le procédé d'emballage pour du silicium polycristallin selon l'une quelconque des revendications 1 à 5 ou par le procédé d'emballage double pour du silicium polycristallin selon les revendications 6 ou 7, et le retrait des morceaux de silicium polycristallin emballés du sac emballé, lesdits morceaux de silicium polycristallin étant une matière première pour produire du silicium monocristallin.
